# EUROPÄISCHE PATENTSCHRIFT

(11) **EP 0 448 992 B1**
(45) Veröffentlichungstag und Bekanntmachung des Hinweises auf die Patenterteilung: **29.12.1993**
(21) Anmeldenummer: 91103254.8
(22) Anmeldetag: 05.03.1991
(51) Int. Cl.: A01D 34/68, B62D 51/00, G05G 5/00

(54) **Sicherheitsfahrschaltung für ein Arbeitsgerät, insbesondere Rasenmäher**
Safety mechanism for a work implement, especially a lawn mower
Mécanisme de sécurité pour un outil de travail, en particulier une tondeuse à gazon

(30) Priorität: 12.03.1990 US 491779
(43) Veröffentlichungstag der Anmeldung: 02.10.1991
(73) Patentinhaber: DEERE & COMPANY, Moline, Illinois 61265 (US)
(72) Erfinder: Braun, Stephen Alphonse, Horicon, Wisconsin 53032 (US); O'Neill, Michael Jerome, Mayville, Wisconsin 53050 (US); Cutshall, Donald Lynn, Burnsville, Minnesota 55337 (US)
(74) Vertreter: Feldmann, Bernhard

(56) Entgegenhaltungen:
- EP-A- 185 513
- GB-A- 2 116 663
- GB-A- 2 154 190
- US-A- 558 558
- US-A- 4 787 195
- US-A- 4 878 339
- US-A- 4 885 903

## Beschreibung

Die Erfindung bezieht sich auf eine Sicherheitsfahrschaltung für ein über einen Motor und mindestens ein Getriebe antreibbares, an Holmen geführtes und ein linkes und ein rechtes Treibrad aufweisendes Arbeitsgerät, insbesondere Rasenmäher, die in einem unbetätigten Zustand eine erste Stellung, in der der Antrieb zu den Treibrädern unterbrochen ist, sowie bei Betätigung wenigstens eines an den Holmen vorgesehenen Handhebels eine zweite Stellung einnehmen kann, in der der Antrieb die Treibräder antreibt, und über die beide Treibräder abbremsbar sind, wobei ein zweites Gestänge vorgesehen ist, über das der Antrieb des linken Treibrades bei Beibehaltung des Antriebs für das rechte Treibrad unterbrochen werden kann, und ein drittes Gestänge, über das der Antrieb des rechten Treibrades unter Beibehaltung des Antriebs für das linke Treibrad unterbrochen werden kann, und wobei zum Lenken über das zweite Gestänge das linke Treibrad und über das dritte Gestänge das rechte Treibrad abbremsbar ist.

Bei dieser Sicherheitsfahrschaltung (US-A-4 558 558) ist der Handhebel fahrradlenkerähnlich ausgebildet. Er kann aus seiner Grundposition, in der die Antriebsverbindung von dem Motor zu den Treibrädern unterbrochen ist, um eine quer verlaufende Welle in eine vordere Stellung verschwenkt werden, in der die Treibräder antreibbar sind, und in eine rückwärtige Stellung, in der die Treibräder abgebremst werden. Zum Lenken wird der Handhebel wie ein Fahrradlenker gedreht. Der Motor treibt ein Getriebe mit je einer an seinen Enden austretenden Ausgangswelle an, auf der jeweils eine Riemenscheibe angeordnet ist. Diese kann über einen Riemen, der über eine Spannrolle spannbar ist, das jeweilige Treibrad antreiben. In der Grundposition und in der rückwärtigen Stellung des Handhebels sind die Spannrollen von den zugehörigen Riemen fortgeschwenkt, so daß die Riemen nicht gespannt sind und der Antrieb unterbrochen ist. In der rückwärtigen über einen Rasthebel feststellbaren Stellung des Handhebels wird noch ein gesondertes Bremsgestänge betätigt. Befindet sich die Sicherheitsfahrschaltung in ihrer vorderen Stellung und wird dann der Handhebel losgelassen, so wird die Sicherheitsfahrschaltung selbsttätig in ihre Grundposition zurückverstellt, in der zwar der Antrieb unterbrochen ist, die Bremsen aber noch nicht angelegt sind. Ein automatischer Schnellstop findet nicht statt und kann nur durchgeführt werden, wenn eine Bedienungsperson den Handhebel nach rückwärts zieht. Insoweit erfüllt diese Sicherheitsfahrschaltung nicht alle Sicherheitsmerkmale, insbesondere wenn die Bedienungsperson den Handhebel losläßt. Hinzu kommt, daß beim Einschlagen des fahradlenkerähnlichen Handhebels zumindest ein großer Kraftaufwand erforderlich ist, da dann der treibende Riemen über die zulässige Riemenspannung hinaus noch gespannt wird. Wenn das Einschlagen überhaupt möglich sein sollte, so wird dabei ein Riemen jedesmal überdehnt und muß relativ früh ersetzt werden. Leichte Einschläge des Handhebels können bereits ein Aus-der-Spur-Laufen des Rasenmähers bedeuten. Ein Führen eines solchen Arbeitsgerätes, das vielfach durch ungeübte Personen erfolgt, ist damit nicht einfach.

Die mit der Erfindung zu lösende Aufgabe wird darin gesehen, die Bedienung eines mit einer Sicherheitsfahrschaltung ausgerüsteten Arbeitsgerätes sicherer und einfacher auszubilden. Diese Aufgabe ist dadurch gelöst, daß dem linken Treibrad ein erstes Getriebe und dem rechten Treibrad ein zweites Getriebe zugeordnet ist, das erste Getriebe mit einem ersten das erste Getriebe zwischen einer Brems- und Antriebsstellung verstellenden Schaltarm und das zweite Getriebe mit einem zweiten das zweite Getriebe zwischen einer Brems- und einer Antriebsstellung verstellenden Schaltarm versehen ist, an dem ersten Schaltarm das zweite Gestänge und an dem zweiten Schaltarm das dritte Gestänge angreift, das zweite und dritte Gestänge an seinem den zugehörigen Schaltarmen abgelegenen Ende mit jeweils einem an den Holmen vorgesehenen Lenkhebel ausgerüstet ist und daß an dem Handhebel ein erstes Gestänge angeschlossen ist, das anderenends an den ersten und zweiten Schaltarm derart angeschlossen ist, daß bei unbetätigtem Handhebel die Getriebe ihre Bremsstellungen einnehmen und daß bei betätigtem Handhebel die Getriebe aus ihren Bremsstellungen in ihre Antriebsstellungen verstellbar sind und jedes Getriebe bei Betätigung des zugehörigen Lenkhebels wieder in seine Bremsstellung zurückverstellbar ist. Auf diese Weise wird beim Kurvenfahren die beispielsweise durch manuelles Niederdrücken des Handhebels betätigte Sicherheitsfahrschaltung nicht verstellt. Sie verbleibt in ihrem betätigten Zustand. Ein einfaches und genaues Führen des Arbeitsgerätes, das mit unterschiedlichen Arbeitsgeräten, wie einem Rasenmäher, einem Räumschild, Bodenbearbeitungsgeräten usw., ausgerüstet sein kann, ist damit möglich. Außerdem ist ein Bremsen bei betätigter Sicherheitsfahrschaltung bei plötzlich auftretenden Gefahren möglich, wenn beide Lenkhebel zusammen betätigt werden.

Beim Loslassen des oder der vorzugsweise an den beiden Holmen vorgesehenen Handhebel wird ein Schnellstop erwirkt, was insbesondere der Sicherheit dient, wenn die Bedienungsperson aus Unachtsamkeit oder aus anderen Gründen den oder die Handhebel losläßt.

Im einzelnen werden bei Betätigung der Sicherheitsfahrschaltung beide Getriebe geschaltet und bei Betätigung des zweiten oder dritten Gestänges nur das zugehörige Getriebe.

Des weiteren wird im Rahmen der Erfindung vorgeschlagen, daß das erste und das zweite Getriebe entgegen Federwirkung in eine entkuppelte Stellung und in ihre Bremsstellungen verstellbar sind. Damit wird bei Betätigung des zweiten oder dritten Gestänges das zugehörige Getriebe aus seiner Antriebsstellung zunächst in eine entkuppelte Stellung verstellt und bei einem weiteren Betätigen des Lenkhebels in seine Bremsstellung. In der entkuppelten Stellung ist ein Kurvenfahren bei mitlaufendem innen liegendem Treibrad bereits möglich. Bei abgebremstem und ausgekuppeltem innen liegendem Treibrad dreht das Arbeitsgerät auf der Stelle. Beim Loslassen des Lenkhebels verbringt die Feder das entsprechende Getriebe in seine Antriebsstellung zurück, und das Arbeitsgerät fährt wieder geradeaus. Beim anfänglichen Betätigen beider Lenkhebel oder des oder der Handhebel der Sicherheitsfahrschaltung wird der gesamte Antrieb zunächst entkuppelt, und beim weiteren Drücken wird das Fahrzeug gebremst.

Damit die Sicherheitsfahrschaltung in ihrem unbetätigten Zustand automatisch in ihre das Fahrzeug abbremsende Ausgangs- oder Grundposition zurückkehrt, sollte ihr Gestänge entgegen der Wirkung einer Feder betätigbar sein. Diese Feder ist natürlich so stark zu bemessen, daß sie die die Getriebe in ihre Antriebsstellungen verstellenden Federkräfte leicht überwindet.

Nach einem weiteren Merkmal der Erfindung sind der erste und zweite Schaltarm mit je einem Langloch versehen, in denen je ein Stellhebel des ersten Gestänges verstellbar angeordnet ist. Auf diese Weise kann über das zweite oder dritte Gestänge das zugehörige Getriebe oder beide Getriebe können leicht betätigt werden, ohne daß dabei die Stellung der Sicherheitsfahrschaltung in ihrem betätigten Zustand, in dem der Fahrantrieb direkt eingerückt werden kann, beeinträchtigt würde.

Vorteilhaft sind hierzu die beiden Stellhebel an ihren den Langlöchern abgelegenen Enden mit einer über den Handhebel aus einer ersten Stellung in eine zweite Stellung verstellbaren Stange gelenkig verbunden, wobei die Feder auf der Stange aufsitzt und beim Verstellen der Stange in die zweite Stellung gespannt wird. Die erste Stellung der Stange entspricht dabei der Bremsstellung der Sicherheitsfahrschaltung und die zweite Stellung der eingerückten Stellung der Sicherheitsfahrschaltung, in der der Fahrantrieb eingerückt ist oder eingerückt werden kann.

Im einzelnen können das zweite und dritte Gestänge je eine mit jedem Lenkhebel verbundene Stellstange aufweisen, die anderenends mit je einem ortsfest gelagerten Winkelhebel gelenkig verbunden sind, die über Stangen an dem ersten und zweiten Schaltarm angelenkt sind. Damit befinden sich auch die Lenkhebel bei ausgerückter Sicherheitsfahrschaltung in ihren Bremsstellungen.

In der Zeichnung ist ein nachfolgend näher erläutertes Ausführungsbeispiel der Erfindung dargestellt. Es zeigt:
- Fig. 1: ein Arbeitsgerät in Form eines Rasenmähers in perspektivischer Darstellung,
- Fig. 2: eine Sicherheitsfahrschaltung mit verbundenem Lenkgestänge in perspektivischer Darstellung,
- Fig. 3: einen Ausschnitt aus der Sicherheitsfahrschaltung,
- Fig. 4: das Gestänge der Sicherheitsfahrschaltung und das Lenkgestänge in Brems- oder Parkstellung,
- Fig. 5: das Gestänge nach Fig. 4 in einer Stellung, in der die Sicherheitsfahrschaltung eingerückt und das Lenkgestänge betätigt ist,
- Fig. 6: das Gestänge nach den Fig. 4 und 5 bei Geradeausfahrt und
- Fig. 7: das Gestänge nach Fig. 6 beim Durchfahren einer Rechtskurve.

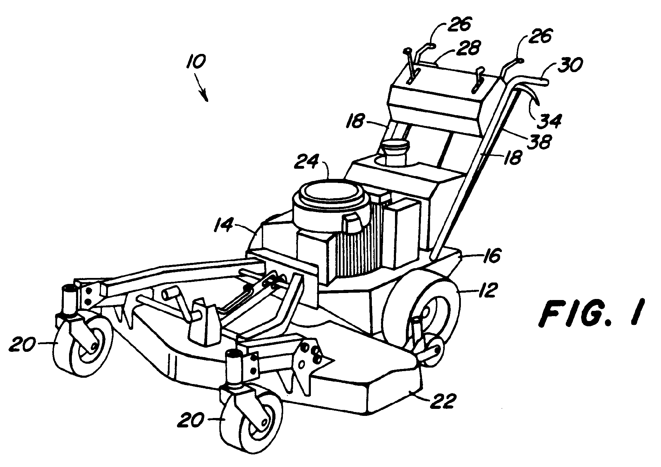

Das in Fig. 1 der Zeichnung dargestellte selbstfahrende Arbeitsgerät wird von einer Bedienungsperson an Holmen geführt und ist demnach nicht mit lenkbaren Rädern ausgerüstet. Die Bedienungsperson kann dabei hinter dem Arbeitsgerät hergehen oder sich auch auf einem an das Arbeitsgerät schwenkbar angeschlossenen und sich auf Laufrädern abstützenden Bedienungsstand befinden. Das Arbeitsgerät ist in Form eines eine relativ große Schnittbreite aufweisenden Rasenmähers 10 dargestellt. Statt dessen können aber auch andere Arbeitswerkzeuge, wie Bodenbearbeitungsgeräte, z. B. Fräsen, angeschlossen werden. In der Beschreibung benutzte Ausdrücke wie rechts und links beziehen sich auf eine das Arbeitsgerät führende Bedienungsperson.

Der Rasenmäher 10 ist mit einem linken und rechten rückwärtigen Treibrad 12 und 14 ausgerüstet. Diese sind an einem Rahmen 16 angeordnet, an dessen rückwärtigem Ende zwei nach oben und rückwärts gerichtete Holme 18 zum Führen des Fahrzeuges vorgesehen sind. Vordere Pendelräder 20 nehmen das frontseitige Ende eines Messerdecks 22 auf, das mit dem Rahmen 16 in geeigneter Weise verbunden ist. Unterhalb des Messerdecks 22 befinden sich umlaufende Sichelmesser, die von einem Motor 24 über nicht gezeigte Riementriebe antreibbar sind. Der Motor 24 dient auch zum Antrieb der Treibräder 12 und 14 über ein erstes und ein zweites in der Zeichnung nicht weiter dargestelltes Getriebe. Eine Sicherheitsfahrschaltung, auch als Totmanneinrichtung bekannt, ist über zwei Handhebel 26 betätigbar, die an den mit Griffteilen 28, 30 versehenen Endbereichen der Holme 18 vorgesehen sind und gleichzeitig erfaßt werden können. Die Handhebel 26 können aber im Rahmen der Erfindung auch als ein einziger Handbügel ausgebildet sein.

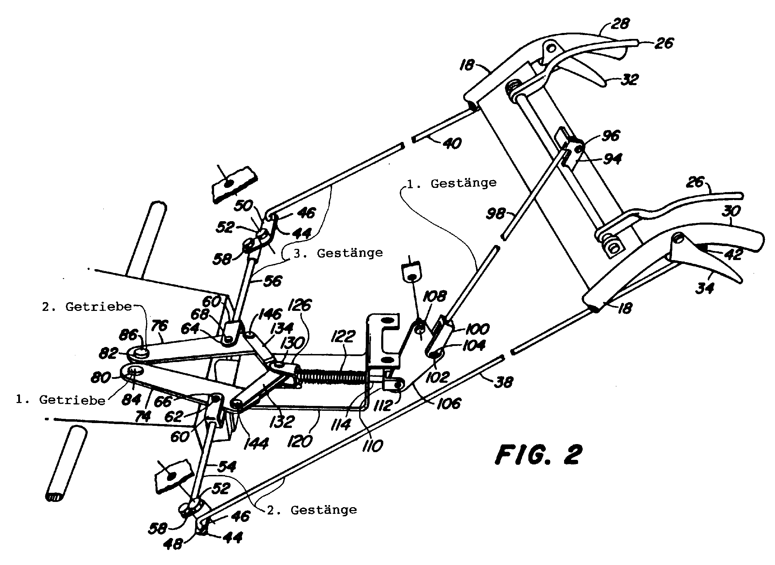

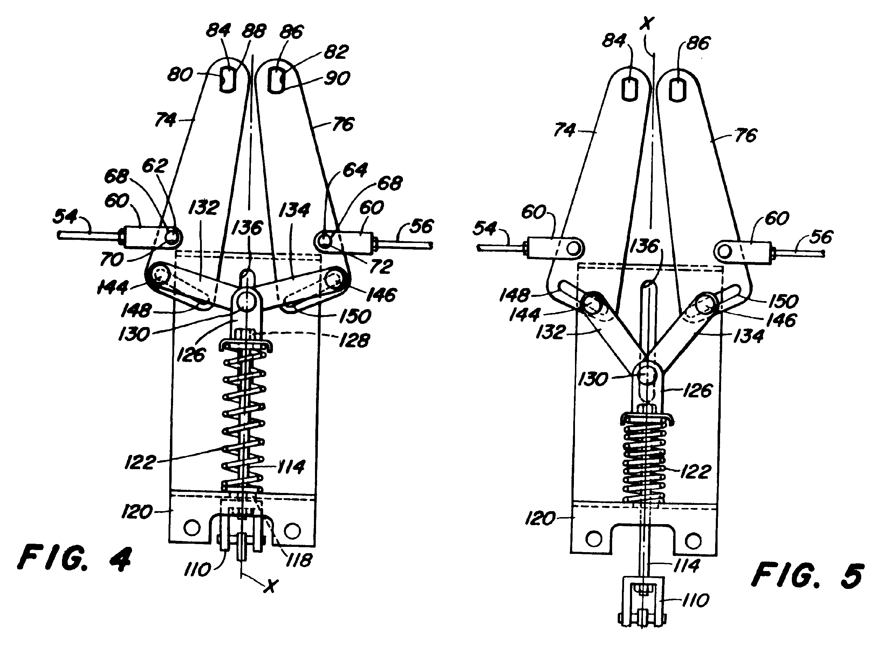

Unterhalb der Griffteile 28 und 30 sind zwei Lenkhebel 32 und 34 schwenkbar angeordnet, über die ein in den Ansprüchen als zweites und drittes Gestänge bezeichnetes Lenkgestänge betätigbar ist. Zu diesem gehören je eine rechte und linke Stellstange 38 und 40, die an den Lenkhebeln angreifen und dort über Muttern 42 gesichert sind. Die den Lenkhebeln 32 und 34 abgelegenen Enden 44 der Stellstangen 38 und 40 sind nach unten abgebogen und werden in Öffnungen 46 aufgenommen, die in dem einen Schenkel von L-förmig ausgebildeten linken und rechten Winkelhebeln 48 und 50 eingearbeitet sind. Beide Winkelhebel 48 und 50 sind über je einen Zapfen 52 mit dem Rahmen 16 schwenkbar verbunden. Linke und rechte Stangen 54 und 56 sind über Öffnungen 58 an die anderen Schenkel der Winkelhebel 48 und 50 angelenkt. Die Stangen 54 und 56 erstrecken sich in Querrichtung auf die Längsmittelebene des Rasenmähers zu und sind an ihren den Winkelhebeln abgelegenen Enden mit je einem U-Bügel 60 versehen. In diese sind Öffnungen 66 und 68 eingearbeitet, durch die Kopfzapfen 62 und 64 geführt sind (siehe insbesondere die Figuren 2 und 4). Die Kopfzapfen 62 und 64 verbinden die U-Bügel 60 mit zu den Getrieben gehörenden Schaltarmen, und zwar ist ein erster Schaltarm 74 dem ersten Getriebe für das Treibrad 12 und ein zweiter Schaltarm 76 dem zweiten Getriebe für das Treibrad 14 zugeordnet. Zur Aufnahme der Kopfzapfen 62 und 64 ist jeder Schaltarm 74 und 76 mit einer Öffnung 70 und 72 versehen (Fig. 4). Über Splinte können die Kopfzapfen 62 und 64 entsprechend gesichert werden. An seinem frontseitigen Ende weist jeder Schaltarm 74 und 76 eine Ausnehmung 80 und 82 auf, in die aus dem ersten und dem zweiten Getriebe austretende Schaltstangen 84 und 86 eingreifen. Bei einem Verschwenken der Schaltarme 74 und 76 wird das zugehörige Getriebe geschaltet, wozu die Schaltstangen 84 und 86 mit einem abgeflachten Profil 88 und 90 versehen sind, das zu der Ausbildung der Ausnehmungen 80 und 82 in den Schaltarmen 74 und 76 korrespondiert. Über Segerringe oder dergleichen können die Schaltarme 74 und 76 auf den Schaltstangen 84 und 86 gesichert werden.

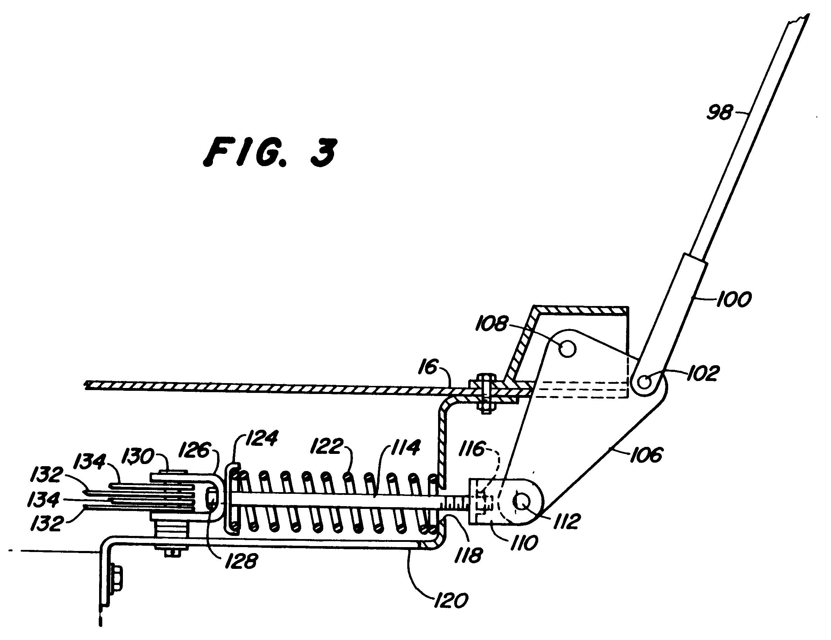

In der Fig. 2 ist das gesamte Gestänge der Sicherheitsfahrschaltung dargestellt. In dieser Figur ist zu erkennen, daß die beiden Handhebel 26 der Sicherheitsfahrschaltung drehfest auf einer quer verlaufenden und drehbar gelagerten Welle aufsitzen, die mittig mit einer eine Bohrung 96 aufweisenden und nach oben zeigenden Nase 94 versehen ist. In die Bohrung 96 der Nase 94 greift das obere Ende einer Verbindungsstange 98 ein, an deren anderen bzw. unteren Ende ein zweiter U-Bügel 100 aufgeschraubt ist. Dieser nimmt einen zweiten Kopfzapfen 102 auf, der mit einem weiteren Winkelhebel 106, der hierzu eine Öffnung 104 aufweist, verbunden ist. Der Winkelhebel 106 selbst ist über einen Zapfen 108 an dem Rahmen 16 angelenkt, so daß er um die Achse des Zapfens 108 vertikal verschwenkbar ist. Ein weiterer U-bügelförmig ausgebildeter Verbindungsteil 110 ist über einen Kopfzapfen 112 an den Winkelhebel 106 angeschlossen und mit einer Stange 114 an seinem der Anlenkstelle an den Winkelhebel 106 abgelegenen Ende versehen. Aus Fig. 3 ist zu ersehen, daß die Stange 114 über eine Mutter 116 in dem Verbindungsteil 110 gesichert ist. Die Stange 114 ist durch eine Öffnung 118 in einer Lasche 120, die mit dem Rahmen 16 verbunden ist, geführt und wird von einer Feder 122 umgeben. Die Feder 122 liegt einenends gegen einen Steg der Lasche 120 und anderenends gegen einen Federteller 124 an, der wiederum gegen einen weiteren U-bügelförmig ausgebildeten Verbindungsteil 126 anliegt. In diesem Verbindungsteil wird die Stange 114 durch eine aufgeschraubte Mutter 128 gehalten. Der Verbindungsteil 126 nimmt einen mit einem Kopf versehenen Gleitzapfen 130 auf, der mit den rückwärtigen Enden zweier Stellhebel 132 und 134 gelenkig verbunden ist. Das untere Ende des Gleitzapfens 130 ist in einem Schlitz 136 geführt, der in die Lasche 120 eingearbeitet ist. Zwischen dem Verbindungsteil 126 und der Lasche 120 können noch auf dem Gleitzapfen 130 Unterlegscheiben vorgesehen werden. Die dem Gleitzapfen 130 abgelegenen vorderen Enden der Stellhebel 132 und 134 nehmen je einen Kopfzapfen 144 und 146 auf, die sich durch Langlöcher 148 und 150 in den Schaltarmen 74 und 76 erstrecken und in diesen verschieblich sind. Hierdurch ist eine Totgangverbindung zwischen den Stellhebeln und den Schaltarmen geschaffen.

Von den jeweiligen Stellungen der Schaltstangen 84 und 86 hängt es ab, ob die Treibräder 12 und 14 angetrieben, entkuppelt oder gebremst sind bzw. sich in einer Zwischenposition befinden. Hierbei steuern der erste und der zweite Schaltarm 74 und 76 die Stellungen der Schaltstangen 84 und 86. Wird zum Beispiel das rückwärtige Ende eines jeden Schaltarmes 74 und 76 zur Mitte des Rasenmähers 10 hin verstellt oder möglichst nah zur zwischen den Schaltarmen 74 und 76 verlaufenden Mittellinie X, dann werden gleichzeitig die beiden Schaltstangen 84 und 86 derart verstellt, daß sich die Getriebe in einer Antriebsposition befinden, in der die Treibräder 12 und 14 von dem Motor 24 angetrieben sind. Wird andererseits das rückwärtige Ende eines Schaltarmes 74 oder 76 von der Mittellinie X in eine Zwischenstellung fortgeschwenkt, so befindet sich die zugehörige Schaltstange 84 oder 86 in einer Stellung, in der der Antrieb ausgekuppelt ist und das zugehörige Treibrad 12 oder 14 frei umlaufen kann. Nähert sich dagegen ein Schaltarm 74 oder 76 seiner extrem außen liegenden Stellung, in der er am weitesten von der Mittellinie X fortgeschwenkt ist, dann befindet sich die zugehörige Schaltstange 84 oder 86 in einer Stellung, in der das entsprechende Treibrad 12 oder 14 gebremst ist. In der Bremsstellung ist der Antrieb ausgekuppelt, und über das Anlegen einer Bremse wird das Fahrzeug abgebremst. In jedem Getriebe kann des weiteren jeweils eine Feder vorgesehen werden, die bestrebt ist, die Schaltstangen 84 und 86 in eine Stellung zurückzuverstellen, in der eine Antriebsverbindung vom Motor 24 zu den Treibrädern 12 und 14 besteht. Anstelle der Federn können auch andere Mittel Verwendung finden, z. B. außerhalb der Getriebe, die die Schaltarme aufeinander zu bewegen wollen.

Zur Wirkungsweise ist folgendes auszuführen.

Bei stehendem Fahrzeug und laufendem Motor 24 befindet sich die Sicherheitsfahrschaltung in einer Stellung, in der der Rasenmäher 10 gebremst ist. Zum Vorwärtsfahren muß daher eine Bedienungsperson zunächst die Handhebel 26 durch Niederdrücken betätigen. Hierdurch verschwenkt die Nase 94 im Uhrzeigerdrehsinn nach oben, und die Verbindungsstange 98 wird nach rückwärts und oben gezogen. Dabei dreht der Winkelhebel 106 entgegen dem Uhrzeigerdrehsinn und zieht die Stange 114 nach rückwärts gegen die Wirkung der Feder 122. Der mit der Stange 114 verbundene Gleitzapfen 130 verschiebt sich in dem Schlitz 136 nach rückwärts und nimmt dabei die rückwärtigen Enden der Stellhebel 132 und 134 mit. Die an den Stellhebeln 132 und 134 vorgesehenen Kopfzapfen 144 und 146 verstellen sich in den Langlöchern 148 und 150 der Schaltarme 74 und 76 und bewirken schließlich, daß die Schaltarme aufeinander zu schwenken infolge der in den Getrieben vorgesehenen Federn. Dadurch verstellen sich die Schaltstangen 84 und 86 in ihre Stellungen, in denen eine Antriebsverbindung vom Motor 24 zu den Treibrädern 12 und 14 besteht. Diese werden dann angetrieben. Damit die Antriebsverbindung nicht unterbrochen wird, müssen die Handhebel 26 in ihrer niedergedrückten Stellung gehalten werden, was keine Schwierigkeit bedeutet, da die Bedienungsperson die Griffteile 28 und 30 an den Holmen 18 gleichzeitig mit den Handhebeln 26 erfassen kann.

Bei eingeschaltetem Antrieb kann eine Richtungsänderung dadurch herbeigeführt werden, daß einer der Lenkhebel 32 oder 34 betätigt wird. Wird z. B. der rechte Lenkhebel 32 betätigt, d. h. gegen den Griffteil 28 gezogen, dann bewegt sich die Stellstange 40 nach rückwärts und oben und verschwenkt dabei den Winkelhebel 50. Dadurch wiederum wird die an der rechten Seite vorgesehene Stange 56 nach außen gezogen und der zweite Schaltarm 76 nach außen rechts verschwenkt. Der Kopfzapfen 146 wird bei dieser Bewegung nicht mitverstellt, da das Langloch 150 in dem Schaltarm 76 vorgesehen ist. Die Positionen des rechten Schalthebels 134 und des Gleitzapfens 130 ändern sich somit nicht. Da die Stellung des Gleitzapfens 130 nicht bei diesem Vorgang geändert wird, verbleibt auch der linke Stellhebel 132 in seiner Lage und damit ebenfalls der erste Schaltarm 74 und die Schaltstange 84. Die Antriebsverbindung zum linken Treibrad 12 wird nicht unterbrochen, wohl aber die Antriebsverbindung zum rechten Treibrad 14. Bei der nach außen rechts gerichteten Schwenkbewegung des Schaltarms 76 wird zunächst der Antrieb ausgekuppelt, und wenn die Bewegung weiter fortgesetzt wird, das rechte Treibrad 14 gebremst. Damit kann eine Rechtskurve durchfahren werden. Zum Fahren einer Linkskurve wird der linke Lenkhebel 34 betätigt. Die Bewegungsabläufe entsprechen den vorbeschriebenen, nur daß sie auf der linken Seite stattfinden.

Um die Fahrgeschwindigkeit des Rasenmähers 10 zu verringern oder um ihn zum Stillstand zu bringen, kann die Bedienungsperson beide Lenkhebel 32, 34 gleichzeitig betätigen, wodurch beide Schaltarme 74 und 76 nach außen verschwenkt werden. Bei vollständig nach außen verschwenkten Schaltarmen 74, 76 werden die Treibräder 12 und 14 gebremst, und der Rasenmäher kommt zum Stillstand. Andererseits kann die Bedienungsperson auch die Sicherheitsfahrschaltung durch Loslassen der Handhebel 26 zur Wirkung bringen, um das Fahrzeug abzubremsen. Infolge der Feder 122 wird dabei die Verbindungsstange 98 nach unten verstellt und die Stange 114 nach vorne. Der Gleitzapfen 130 verschiebt sich dann in seinem Schlitz 136 ebenfalls nach vorne, und die Schaltarme 74 und 76 werden über die Schalthebel 132 und 134 bzw. die sich dann gegen die äußeren Enden der Langlöcher 148, 150 schiebenden Kopfzapfen 144, 146 nach außen verschwenkt, wodurch zunächst die Kupplungen ausgerückt und schließlich die Treibräder 12 und 14 gebremst werden.

Die Lenkhebel 32 und 34 und auch die Handhebel 26 der Sicherheitsfahrschaltung können von der Bedienungsperson in einer Vielzahl von Zwischenstellungen gehalten werden. Ebenso können die beiden Getriebe eine Vielzahl von Zwischenstellungen in Abhänigkeit von der Stellung der Lenkhebel und der Handhebel einnehmen, so daß die Bedienungsperson die genaue Fahrgeschwindigkeit und auch den Kurvenradius auswählen kann. Durch gefühlvolles Betätigen der entsprechenden Hebel kann die Fahrgeschwindigkeit vergrößert oder verkleinert werden. Gleiches gilt für den Kurvenradius.

Sobald die Bedienungsperson die Handhebel der Sicherheitsfahrschaltung losläßt, wird der Antrieb entkuppelt und das Fahrzeug gebremst.

Die Figuren 4 bis 7 zeigen unterschiedliche Stellungen, die das Gestänge der Sicherheitsfahrschaltung und das Lenkgestänge einnehmen können. Fig. 4 zeigt die Lage der Gestänge, wenn der Rasenmäher 10 abgestellt ist bzw. sich nicht im Einsatz befindet. In der Fig. 4 Stellung hat die Feder 122 die Schaltarme 74 und 76 in ihre extreme Außenstellung verschwenkt, in der die Bremsen angelegt sind.

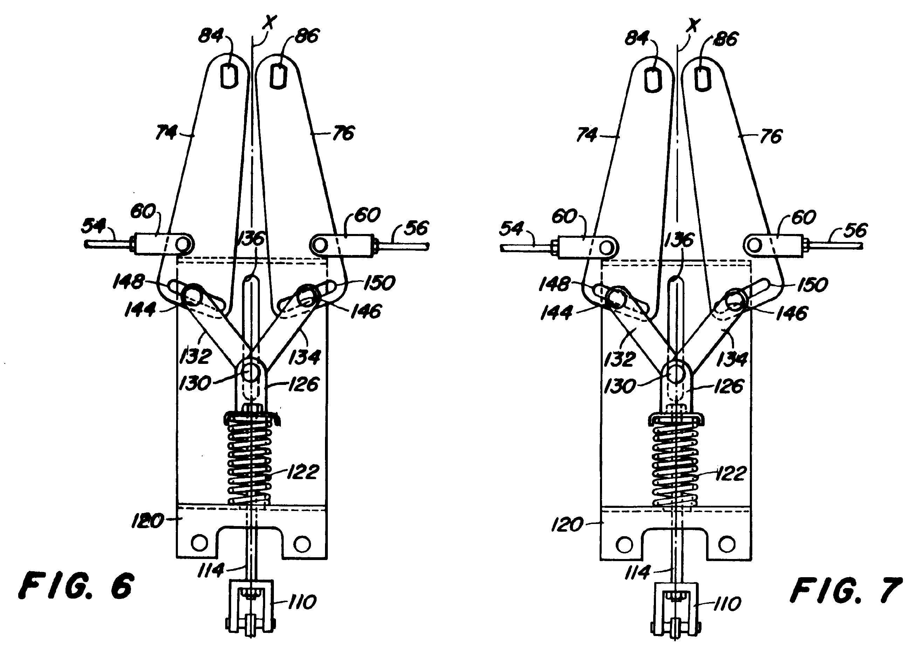

Fig. 6 gibt die Gestängeanordnung bei Geradeausfahrt wieder. In dieser Stellung sind die Handhebel 26 der Sicherheitsfahrschaltung betätigt und damit heruntergedrückt. Beim anfänglichen Herunterdrücken wird der Gleitzapfen 130 nach rückwärts gezogen, und die Kopfzapfen 144 und 148 bewegen sich auf die Mittellinie X zu. Infolge der in den Getrieben vorgesehenen Federn können die Schaltarme 74 und 76 dieser Bewegung folgen. Die Bremsen werden gelöst und die Kupplungen eingerückt. Bei einem weiteren Herunterdrücken der Handhebel 26 geben die Kopfzapfen 144 und 146 die außen liegenden Enden der Langlöcher 148 und 150 schließlich frei und nehmen in den Langlöchern eine mittige in Fig. 6 wiedergegebene Stellung ein.

Fig. 5 zeigt die Lage der Gestänge bei betätigten bzw. vollständig heruntergedrückten Handhebeln 26 der Sicherheitsfahrkupplung und bei betätigten Lenkhebeln 32 und 34. Der Gleitzapfen 130 befindet sich in seiner extremen rückwärtigen Position. Die beiden Stangen 54 und 56 des Lenkgestänges sind ganz nach außen gezogen, wodurch die Schaltarme 74 und 76 in ihre extrem außen liegenden Stellungen verschwenkt wurden, in denen die Bremsen angelegt sind. Die Verschwenkung der Schaltarme nach außen wird wiederum durch die in diesen vorgesehenen Langlöcher 148 und 150 ermöglicht. Die Lage des Gestänges der Sicherheitsfahrschaltung wird nicht beeinträchtigt.

Fig. 7 zeigt die Gestängelage bei einer zu durchfahrenden Rechtskurve. Die Handhebel 26 der Sicherheitsfahrschaltung sind betätigt, und der Gleitzapfen 130 befindet sich in seiner extrem rückwärtigen Position. Der rechte Lenkhebel 32 ist ebenfalls betätigt, wodurch der rechte Schaltarm 76 nach außen gezogen wurde. Hierdurch wurde die rechte Bremse für das Treibrad 14 angelegt. Infolge des Langloches 150 in dem rechten Schaltarm 76 konnte der Schaltarm 76 nach außen schwenken, ohne daß die Position des Kopfzapfens 146 verändert worden wäre. Ebenfalls wurde bei diesem Vorgang auch die Lage des linken Schaltarms 132 nicht verändert. Dennoch ist es möglich, in dieser Stellung der Gestänge sowohl den rechten als auch den linken Lenkhebel 32 oder 34 in den Stellungen zu verstellen, so daß ein größerer oder kleinerer Kurveneinschlag bei unterschiedlicher Geschwindigkeit erreichbar ist.

## Patentansprüche

1. Sicherheitsfahrschaltung für ein über einen Motor (24) und mindestens ein Getriebe antreibbares, an Holmen (18) geführtes und ein linkes und ein rechtes Treibrad (12 und 14) aufweisendes Arbeitsgerät, insbesondere Rasenmäher (10), die in einem unbetätigten Zustand eine erste Stellung, in der der Antrieb zu den Treibrädern (12 und 14) unterbrochen ist, sowie bei Betätigung wenigstens eines an den Holmen (18) vorgesehenen Handhebels (26) eine zweite Stellung einnehmen kann, in der der Antrieb die Treibräder (12 und 14) antreibt, und über die beide Treibräder (12 und 14) abbremsbar sind, wobei ein zweites Gestänge vorgesehen ist, über das der Antrieb des linken Treibrades (12) bei Beibehaltung des Antriebs für das rechte Treibrad (14) unterbrochen werden kann, und ein drittes Gestänge, über das der Antrieb des rechten Treibrades (14) unter Beibehaltung des Antriebs für das linke Treibrad (12) unterbrochen werden kann, und wobei zum Lenken über das zweite Gestänge das linke Treibrad (12) und über das dritte Gestänge das rechte Treibrad (14) abbremsbar ist, dadurch gekennzeichnet, daß dem linken Treibrad (12) ein erstes Getriebe und dem rechten Treibrad (14) ein zweites Getriebe zugeordnet ist, das erste Getriebe mit einem ersten das erste Getriebe zwischen einer Brems- und Antriebsstellung verstellenden Schaltarm (74) und das zweite Getriebe mit einem zweiten das zweite Getriebe zwischen einer Brems- und einer Antriebsstellung verstellenden Schaltarm (76) versehen ist, an dem ersten Schaltarm (74) das zweite Gestänge und an dem zweiten Schaltarm (76) das dritte Gestänge angreift, das zweite und dritte Gestänge an seinem den zugehörigen Schaltarmen (74, 76) abgelegenen Ende mit jeweils einem an den Holmen (18) vorgesehenen Lenkhebel (32 und 34) ausgerüstet ist und daß an dem Handhebel (26) ein erstes Gestänge angeschlossen ist, das anderenends an den ersten und zweiten Schaltarm (74, 76) derart angeschlossen ist, daß bei unbetätigtem Handhebel (26) die Getriebe ihre Bremsstellungen einnehmen und daß bei betätigtem Handhebel (26) die Getriebe aus ihren Bremsstellungen in ihre Antriebsstellungen verstellbar sind und jedes Getriebe bei Betätigung des zugehörigen Lenkhebels (32 bzw. 34) wieder in seine Bremsstellung zurückverstellbar ist.

2. Sicherheitsfahrschaltung nach Anspruch 1, dadurch gekennzeichnet, daß das erste und das zweite Getriebe entgegen Federwirkung in eine entkuppelte Stellung und in ihre Bremsstellungen verstellbar sind.

3. Sicherheitsfahrschaltung nach Anspruch 1 oder 2, dadurch gekennzeichnet, daß das erste Gestänge entgegen der Wirkung einer Feder (122) betätigbar ist.

4. Sicherheitsfahrschaltung nach einem oder mehreren der vorherigen Ansprüche, dadurch gekennzeichnet, daß der erste und zweite Schaltarm (74 und 76) mit je einem Langloch (148, 150) versehen sind, in denen je ein Stellhebel (132, 134) des ersten Gestänges verstellbar angeordnet ist.

5. Sicherheitsfahrschaltung nach Anspruch 4, dadurch gekennzeichnet, daß die beiden Stellhebel (132, 134) an ihren den Langlöchern (148, 150) abgelegenen Enden mit einer über den Handhebel (26) aus einer ersten Stellung in eine zweite Stellung verstellbaren Stange (114) gelenkig verbunden sind, wobei die Feder (122) auf der Stange (114) aufsitzt und beim Verstellen der Stange (114) in die zweite Stellung gespannt wird.

6. Sicherheitsfahrschaltung nach einem oder mehreren der vorherigen Ansprüche, dadurch gekennzeichnet, daß das zweite und dritte Gestänge je eine mit jedem Lenkhebel (32 und 34) verbundene Stellstange (38, 40) aufweisen, die anderenends mit je einem ortsfest gelagerten Winkelhebel (48, 50) gelenkig verbunden sind, die über Stangen (54, 56) an dem ersten und zweiten Schaltarm (74, 76) angelenkt sind.

## Claims

1. A safety control mechanism for a working implement, especially a lawn mower (10), drivent by an engine (24) and at least one gear, operated by handles (18) and having left and right driving wheels (12 and 14), which mechanism can assume a first position in an un-operated state, in which the drive to the drive wheels (12 and 14) is interrupted, as well as a second position on operation of a manual lever (26) provided on at least one of the handles (18), in which second position the drive wheels (12 and 14) are driven and through which mechanism the two drive wheels (12 and 14) can be braked, wherein a second linkage is provided, through which the drive to the left drive wheel (12) can be interrupted while maintaining the drive to the right drive wheel (14), and a third linkage through which the drive to the right drive wheel (14) can be interrupted while maintaining the drive to the left drive wheel (12), and wherein the left drive wheel (12) and the right drive wheel (14) can be braked through the second and third linkages respectively in order to steer, characterized in that a first gear and a second gear are associated with the left and right drive wheels (12 and 14) respectively, the first gear is provided with a first shift arm (74) shifting the first gear between a braking and a drive position, and the second gear is provided with a second shift arm (76) shifting the second gear between a braking and driving position, the second linkage engaging the first shift arm (74) and the third linkage engaging the second shift arm (76), the second and third linkages being provided at their ends remote from the associated shift arm (74, 76) with respective steering levers (32 and 34) provided on the handles (18), and in that a first linkage is connected to the manual lever (26), the other end of this linkage being so connected to the first and second shift arms (74, 76) that, with the manual lever (26) not operated, the gears assume their braking position and that, with the manual lever (26) operated, the gears can be shifted out of their braking positions into their drive positions and each gear can be shifted back into its braking position by operation of the associated steering lever (32 or 34).

2. A safety control mechanism according to claim 1, characterized in that the first and second gears can be shifted against spring action into an uncoupled position and into their braking position.

3. A safety control mechanism according to claim 1 or 2, characterized in that the first linkage can be operated against the action of a spring (122).

4. A safety control mechanism according to one or more of the preceding claims, characterized in that the first and second shift arms (74 and 76) are each provided with a slot (148, 150), in each of which an actuating lever (132, 134) of the first linkage is adjustably arranged.

5. A safety control mechanism according to claim 4, characterized in that the two actuating levers (132, 134) are articulated to a rod (114) at their ends remote from the slots (148, 150), the rod being adjustable from a first position to a second position by the manual lever (26), the spring (122) being fitted on the rod (114) and being stressed on shifting the rod (114) into the second position.

6. A safety control mechanism according to one or more of the preceding claims, characterized in that the second and third linkages each have an actuating rod (38, 40) connected to the respective steering lever (32 and 34) and which are each articulated at the other end to a cranked lever (48, 50) mounted in a fixed position, the cranked levers being articulated through rods (54, 56) to the first and second shift arms (74, 76).

## Revendications

1. Mécanisme de conduite de sécurité pour un outil de travail pouvant être entraîné par un moteur (24) et au moins une transmission, et présentant une roue motrice gauche et une roue motrice droite (12 et 14), en particulier pour une tondeuse à gazon (10), ledit mécanisme pouvant prendre, à l'état non actionné, une première position dans laquelle l'entraînement pour les roues motrices (12 et 14) est interrompu, et pouvant prendre, lors de l'actionnement d'au moins un levier à main (26) prévu sur les bras (18) de l'outil, une deuxième position dans laquelle l'entraînement entraîne les roues motrices (12 et 14), et ledit mécanisme permettant de freiner les deux roues motrices (12 et 14), une deuxième tringlerie étant prévue, par l'intermédiaire de laquelle l'entraînement de la roue motrice gauche (12) peut être interrompu en conservant l'entraînement pour la roue motrice droite (14), ainsi qu'une troisième tringlerie, par l'intermédiaire de laquelle l'entraînement de la roue motrice droite (14) peut être interrompu en conservant l'entraînement pour la roue motrice gauche (12), et, aux fins de direction, la roue motrice gauche (12) pouvant être freinée par l'intermédiaire de la deuxième tringlerie, et la roue motrice droite (14) par l'intermédiaire de la troisième tringlerie, **caractérisé** en ce qu'une première transmission est associée à la roue motrice gauche (12) et une seconde transmission à la roue motrice droite (14), la première transmission est dotée d'un premier bras de commutation (74) déplaçant la première transmission entre une position de freinage et une position d'entraînement, et la seconde transmission est dotée d'un second bras de commutation (76) déplaçant la seconde transmission entre une position de freinage et une position d'entraînement, la deuxième tringlerie agit sur le premier bras de commutation (74) et la troisième tringlerie sur le second bras de commutation (76), et la deuxième et la troisième tringleries sont respectivement équipées, à leur extrémité opposée au bras de commutation associé (74, 76), d'un levier de direction respectif (32 et 34) prévu sur les bras (18), et en ce qu'une première tringlerie est raccordée au levier à main (26), laquelle est raccordée par son autre extrémité aux premier et second bras de commutation (74, 76) de telle sorte que les transmissions prennent leurs positions de freinage lorsque le levier à main (26) n'est pas actionné et que, lorsque le levier à main (26) est actionné, les transmissions peuvent être déplacées de leurs positions de freinage dans leurs positions d'entraînement et chaque transmission peut être ramenée dans sa position de freinage lors de l'actionnement du levier de direction associé (32 ou 34).

2. Mécanisme de conduite de sécurité selon la revendication 1, **caractérisé** en ce que la première et la seconde transmission peuvent être déplacées, à l'encontre d'une force de ressort, dans une position désaccouplée et dans leurs positions de freinage.

3. Mécanisme de conduite de sécurité selon la revendication 1 ou 2, **caractérisé** en ce que la première tringlerie peut être actionnée à l'encontre de l'action d'un ressort (122).

4. Mécanisme de conduite de sécurité selon l'une quelconque des revendications précédentes, **caractérisé** en ce que le premier et le second bras de commutation (74 et 76) sont chacun pourvus d'un trou oblong (148, 150), dans lequel est disposé avec possibilité de déplacement un levier de commande respectif (132, 134) de la première tringlerie.

5. Mécanisme de conduite de sécurité selon la revendication 4, **caractérisé** en ce que les deux leviers de commande (132, 134) sont reliés de manière articulée, à leurs extrémités éloignées des trous oblongs (148, 150), à une tringle (114) qui peut être déplacée d'une première position dans une seconde position par l'intermédiaire du levier à main (26), le ressort (122) étant monté sur la tringle (114) et étant tendu lors du déplacement de la tringle (114) dans la seconde position.

6. Mécanisme de conduite de sécurité selon l'une quelconque des revendications précédentes, **caractérisé** en ce que la deuxième et la troisième tringleries présentent chacune une tringle de commande (38, 40), qui est respectivement reliée à un des leviers de direction (32 et 34) et qui, à son autre extrémité, est reliée de manière articulée à un levier coudé respectif (48, 50), monté stationnairement, les leviers coudés (48, 50) étant respectivement articulés, par l'intermédiaire de tringles (54, 56), au premier et au second bras de commutation (74, 76).
